# EUROPEAN PATENT APPLICATION

(11) **EP 4 790 558 A1**
(43) Date of publication of application: **12.08.2026**
(21) Application number: 25173068.5
(22) Date of filing: 29.04.2025
(51) Int. Cl.: G06F 9/52, G06F 15/167

(54) **METHOD AND DEVICE FOR CONTROLLING BUFFER**

(30) Priority: 10.02.2025 KR 20250016575
(71) Applicant: Hyundai Mobis Co., Ltd., Gangnam-gu Seoul 06141 (KR)
(72) Inventor: JEON, Byeong Hwan, 16891 Yongin-si, Gyeonggi-do (KR); NA, Young Hun, 16891 Yongin-si, Gyeonggi-do (KR)
(74) Representative: Jung, Minkyu

(57) **Abstract**

A processor-implemented method including increasing a value of count information responsive to determining whether a buffer is in use and responsive to input data being input to the buffer, locking the buffer responsive to the increasing of a value of the count information, decreasing the value of the count information responsive to a completion of reading the input data in the buffer, and unlocking the buffer responsive to the decreasing of the value of the count information.

## Description

### CROSS-REFERENCE TO RELATED APPLICATION

This application claims the benefit under 35 USC § 119(a) of Korean Patent Application Number 10-2025-0016575, filed on February 10, 2025, the entire disclosure of which is incorporated herein by reference for all purposes.

### BACKGROUND

### Technical Field

The present disclosure relates to a method and device for controlling a buffer.

### Discussion of the Related Art

Software components of a vehicle are required to take charge of functions for applications related to autonomous driving technology. Due to a plurality of software (SW) components, data resources need to be shared between the software components. Resource sharing between the software components should guarantee data integrity. For the data integrity, the shared resources may be implemented based on sections related to the software components, or scheduling for the software components may be defined in a compilation stage. Concurrent resource sharing between the software components causes a problem of conflicts between accesses to the resources.

As the complexity of autonomous driving applications becomes higher, the number of SW components also increases. A main section division method or a static scheduling method established in the compilation stage has limitations in that it lowers performance when implementing the application's architecture or it is difficult to cope with high complexity.

The use of the main section may increase the number of SW components waiting for having an access to the shared resources, and the use of the static scheduling may halve the time that the SW components occupy the CPU for a certain period of time. For example, when there are two nodes operating in a period of 10 ms, each node may occupy the CPU for 5 ms. However, when the number of nodes increases to 5, each node may occupy the CPU for only 2 ms. Further, as the complexity becomes higher, there is a problem that it is difficult to apply input/output synchronization between the nodes.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In a general aspect, here is provided a processor-implemented method including increasing a value of count information responsive to determining whether a buffer is in use and responsive to input data being input to the buffer, locking the buffer responsive to the increasing of a value of the count information, decreasing the value of the count information responsive to a completion of reading the input data in the buffer, and unlocking the buffer responsive to the decreasing of the value of the count information.

The buffer may be one of a plurality of buffers, the plurality of buffers may include a queue, and the method may include inputting, by a first node, first data of the input data to a first buffer within the queue, reading by a second node, the first data, and inputting, by the first node, second data of the input data to a second buffer within the queue.

The buffer may include a plurality of nodes, each node of the plurality of nodes being configured to perform operations within a same period, the method may include inputting, by a first node among the plurality of nodes, first data of the input data to the buffer, reading, by a second node and a third node among the plurality of nodes, the first data from the buffer, and inputting, by the second node, second data of the input data to the buffer and synchronizing and processing, by the third node, the first data and the second data.

The buffer may include a plurality of nodes, first nodes of the plurality of nodes being configured to perform operations within a same first period and second nodes of the plurality of nodes being configured to perform operations within a second period, the second period being different from the first period, the method may include synchronizing, by the first nodes, first data input of the input data by the first nodes, and only synchronization data of the input data related to the synchronizing of the first nodes among second data input by the second node is processed.

The buffer may be one of a plurality of buffers, the plurality of buffers may include a first queue identified by a first parameter and a second queue identified by a second parameter, and the method further may include inputting, by a first node, first data of the input data to the first queue and the second queue, reading, by a second node, first data from the first queue, and reading, by a third node, second data from the second queue.

The method may include inputting integrity information about integrity of the input data to the buffer subsequent to the input data being input to the buffer, the integrity information being one or more of a cyclic redundancy check (CRC), a time stamp, or a frame count.

The buffer may include a ring buffer and the method may include reading, by a second node, first data input by a first node to a first buffer within the ring buffer and inputting, by the first node, second data to a second buffer within the ring buffer.

The buffer may include data input by a node and an indicator indicating whether the input data is in buffer and the data input to the buffer may be output based on the indicator.

The buffer may include one or more of a queue or a ring buffer, and a number of buffers within the queue or a size of the ring buffer may be adjusted based on a number of nodes sharing the buffer.

In a general aspect, here is provided an electronic apparatus including one or more processors configured to execute instructions, a memory storing the instructions, and execution of the instructions configures the one or more processors to increase a value of count information responsive to determining whether a buffer is in use and responsive to input data being input to the buffer, lock the buffer responsive to the increasing of the value of the count information, decrease the value of the count information responsive to a completion of reading the input data in the buffer, and unlock the buffer responsive to the decreasing of the value of the count information.

### BRIEF DESCRIPTION OF THE DRAWINGS

FIG. 1 illustrates a method of managing and scheduling a buffer according to embodiments.
FIG. 2 illustrates a method of managing and scheduling a buffer according to embodiments.
FIG. 3 illustrates a method of managing and scheduling a buffer according to embodiments.
FIG. 4 illustrates a method of managing and scheduling a buffer according to embodiments.
FIG. 5 illustrates a method of managing and scheduling a buffer according to embodiments.
FIG. 6 illustrates a method of guaranteeing data integrity according to embodiments.
FIG. 7 illustrates a method of guaranteeing performance according to embodiments.
FIG. 8 illustrates a method of guaranteeing performance according to embodiments.
FIG. 9 illustrates a device for controlling a buffer according to embodiments.

Throughout the drawings and the detailed description, unless otherwise described or provided, the same, or like, drawing reference numerals may be understood to refer to the same, or like, elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Advantages and features of the present disclosure and methods of achieving the advantages and features will be clear with reference to embodiments described in detail below together with the accompanying drawings. However, the present disclosure is not limited to the embodiments disclosed herein but will be implemented in various forms. The embodiments of the present disclosure are provided so that the present disclosure is completely disclosed, and a person with ordinary skill in the art can fully understand the scope of the present disclosure. The present disclosure will be defined only by the scope of the appended claims. Meanwhile, the terms used in the present specification are for explaining the embodiments, not for limiting the present disclosure.

Terms, such as first, second, A, B, (a), (b) or the like, may be used herein to describe components. Each of these terminologies is not used to define an essence, order or sequence of a corresponding component but used merely to distinguish the corresponding component from other component(s). For example, a first component may be referred to as a second component, and similarly the second component may also be referred to as the first component.

Throughout the specification, when a component is described as being "connected to," or "coupled to" another component, it may be directly "connected to," or "coupled to" the other component, or there may be one or more other components intervening therebetween. In contrast, when an element is described as being "directly connected to," or "directly coupled to" another element, there can be no other elements intervening therebetween.

In a description of the embodiment, in a case in which any one element is described as being formed on or under another element, such a description includes both a case in which the two elements are formed in direct contact with each other and a case in which the two elements are in indirect contact with each other with one or more other elements interposed between the two elements. In addition, when one element is described as being formed on or under another element, such a description may include a case in which the one element is formed at an upper side or a lower side with respect to another element.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

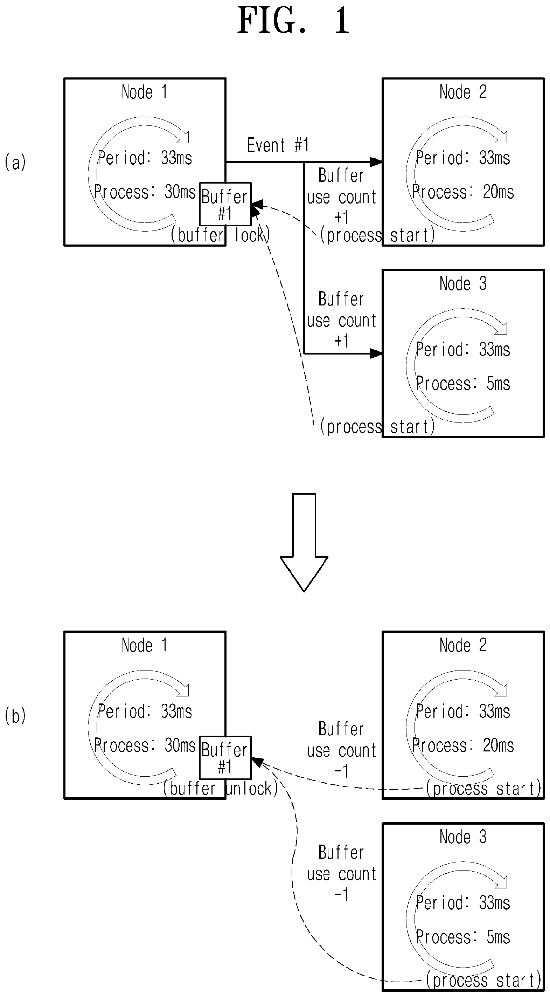

FIG. 1 illustrates a method of managing and scheduling a buffer according to embodiments.

A buffer control method according to embodiments relates to a method of scheduling multi-inputs and multi-outputs in operations of writing and reading data between a buffer and a node. The buffer control method includes a method of managing and scheduling buffer control so that nodes for a plurality of software components to provide applications related to the functions of a vehicle and/or autonomous driving of a vehicle can safely and efficiently access data resources in a buffer. Hereinafter, the buffer control method according to embodiments may be abbreviated as a method according to embodiments. Data read from a buffer to process a node's job or data stored (written) in a buffer as a result generated after the node's job processing may be referred to as resources. One or more nodes may write data in a shared buffer or read data from the shared buffer. Data may be referred to as a resource or a shared resource.

The method according to embodiments may include a method of locking and unlocking a buffer based on count information about buffer use.

As shown in FIG. 1, it will be described how a plurality of nodes, for example, three nodes manage and schedule a buffer. According to the method according to embodiments, a buffer (memory) may be locked or unlocked in order to protect operations of writing data transceived between the nodes in the buffer or reading the data from the buffer. Buffer locking refers to an operation of controlling an access of specific data in order to prevent a collision between data when multiple data are input to the buffer. On the other hand, buffer unlocking refers to an operation of releasing the buffer locking and allowing the access of data.

For example, in a case where a node 1 (first node) writes data in the buffer and a node 2 (second node) and a node 3 (third node) read data from the buffer, the node 1 according to embodiments may be locked to prevent the node 1 from rewriting data to the buffer and may be unlocked when the node 2 and the node 3 complete the operation of reading data.

Each node has a period and a process time. The period refers to a periodic time taken for the node to complete one job and start the next job. The process time refers to time taken for the node to process one job. The period and/or process time between the nodes may vary depending on the functions of the nodes. For example, the nodes 1 to 3 in FIG. 1 may have a period of 33 ms, the node 1 may have a process time of 30 ms, the node 2 may have a process time of 20 ms, and the node 3 may have a process time of 5 ms.

Referring to FIG. 1(a), the node 1 may write data to the buffer while processing a job, and notify the nodes 2 and 3 of event information indicating the results of the buffer writing. The nodes 2 and 3 increase a value of count information (buffer_use_count), which indicates whether the buffer is in use, by '1' to start processing their jobs and read the written data from the buffer (memory). The method according to embodiments locks the buffer based on the increased count information (buffer_use_count).

Referring to FIG. 1(b), the nodes 2 and 3 complete the job processing according to each processing time and decrease the value of the count information (buffer_use count) of the buffer by '1.'The method according to embodiments unlocks the buffer based on the decreased count information (buffer_use_count).

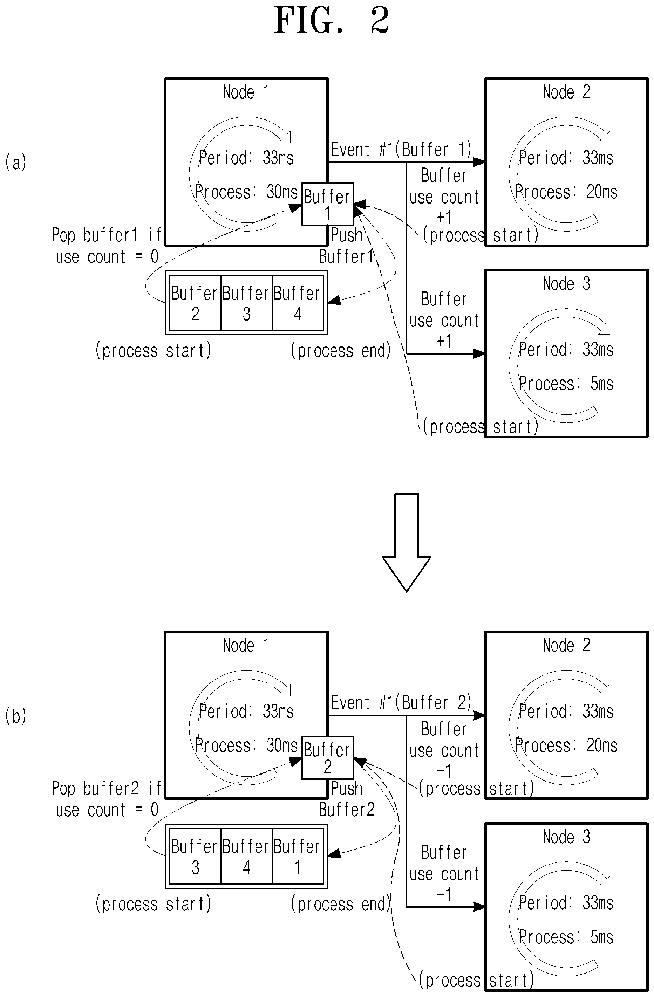

FIG. 2 illustrates a method of managing and scheduling a buffer according to embodiments.

The method according to embodiments may further include a method of providing a pipeline by queuing data transmitted between nodes in the buffer to guarantee the maximum performance of an application. For example, the pipeline of the queueing-based buffer may include a plurality of buffers. The pipeline of the queueing-based buffer may include a buffer having a plurality of depths. A queue including the buffers according to the embodiments may operate in a first-in, first-out (FIFO) manner.

Referring to FIG. 2(a), the node 1 may write data to the buffer 1 (first buffer), of which the count information about the buffer use (buffer_use_count) is '0,' to process a job, and notify the nodes 2 and 3 of event information indicating that data has been written to the buffer 1. The nodes 2 and 3, which have received the event information, may start processing the job, and may increase the value of the count information about the buffer use (buffer_use_count) by '1'. The method according to embodiments may place the buffer 1 in the queue on the pipeline based on the increased count information (buffer_use_count).

Referring to FIG. 2(b), the node 1 may write data to the buffer 2 (second buffer) of the queue, of which the count information about the buffer use (buffer_use_count) is '0,' to process the next job. The node 1 may notify the nodes 2 and 3 of event information indicating whether the buffer 2 is in use. The nodes 2 and 3 may complete the job processing based on the data of the buffer 1, and decrease the value of the count information about the buffer use (buffer_use_count) by '1.' The method according to embodiments may place the buffer 2 in the queue on the pipeline based on the decreased count information (buffer_use_count).

According to the embodiments, the queue-shaped buffers are used in parallel, thereby accessing data resources and performing writing/reading operations without conflicts.

Thus, the method according to embodiments can guarantee the performance of a shared resource-based application. The queue-shaped buffers described in FIG. 2 may be configured as a ring buffer structure. For example, N buffers may be configured to transmit data between the nodes because the input (writing) data of the buffer and the output (reading) data of the buffer are read and written in the ring buffer. Due to the queue- and/or ring-shaped buffers, while data is being written to a buffer and the data written by another node is being consumed, the node may simultaneously write data to another buffer having a queue and/or ring structure. Thus, data races are prevented, thereby providing the maximum operational performance through parallel processing.

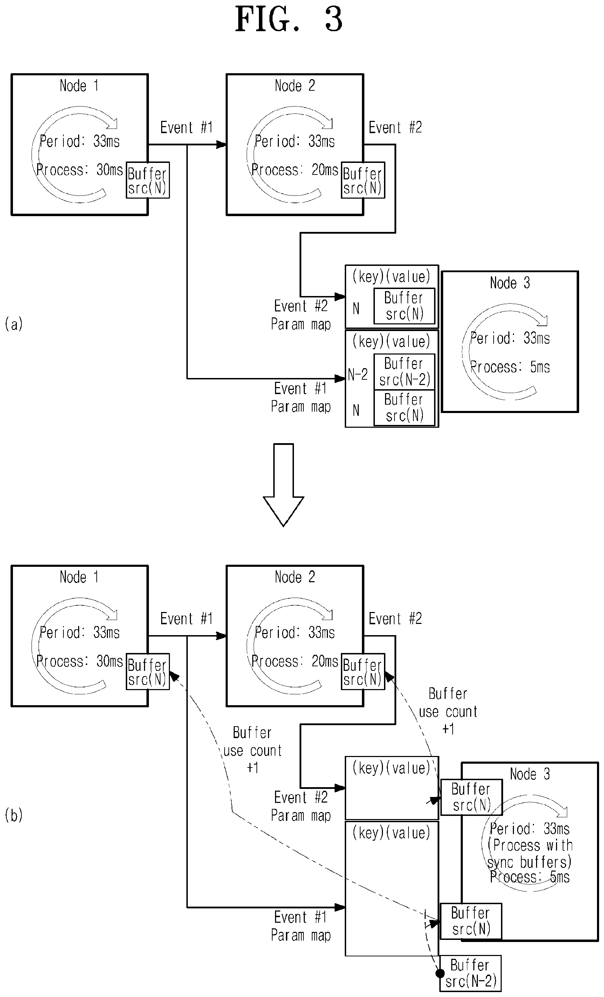

FIG. 3 illustrates a method of managing and scheduling a buffer according to embodiments.

The method according to embodiments may further include a method of synchronizing multi-input data between nodes having the same operation period.

The nodes 1 to 3 may have the same period. The example shown in FIG. 3 will be described on the assumption that the nodes have a period of 33 ms.

Referring to FIG. 3(a), the node 1 may process a job, write data to a buffer, and notify the nodes 2 and 3 that the buffer writing has been completed as event information. The nodes 2 and 3 may read the data stored in the buffer. In this case, a buffer source will be referred to as 'N.'

Because the nodes 1 to 3 have the same period, the node 1 does not write other data to the same buffer before the nodes 2 and 3 read data from the buffer (buffer source: N). The node 2 may read data stored in the buffer (buffer source: N), process a job, and write related data to the buffer (buffer source: N). Because the node 3 has already read the data stored in the buffer (buffer source: N), a data conflict is prevented. The node 2 may notify the node 3 that the buffer writing (buffer source: N) has been completed as event information. The node 1 may write additional data to the buffer during the job of the node 2. Compared to the buffer source of the previous period, the additional buffer source may be referred to as 'N-1.'

Referring to FIG. 3(b), the node 3 may synchronize the data written to the buffer source N of the node 2 and the data written to the buffer source N of the node 1 to use the data in the job processing of the node 3. The node 3 may increase the value of the count information about the buffer use (buffer_use_count), which indicates that the data for the nodes 1 and 2 have been read from the buffer, by '1'. In addition, key information about other buffer sources may be deleted/(dropped) from a parameter map. The key information may refer to a value for identifying the buffer source. The parameter map may refer to a map for storing additional information about the buffer. For example, a key value for identifying a buffer source may be stored in the parameter map. The method according to embodiments may perform synchronization between multi-input data based on the same key information of the buffer source when reading the multi-input data for a plurality of nodes.

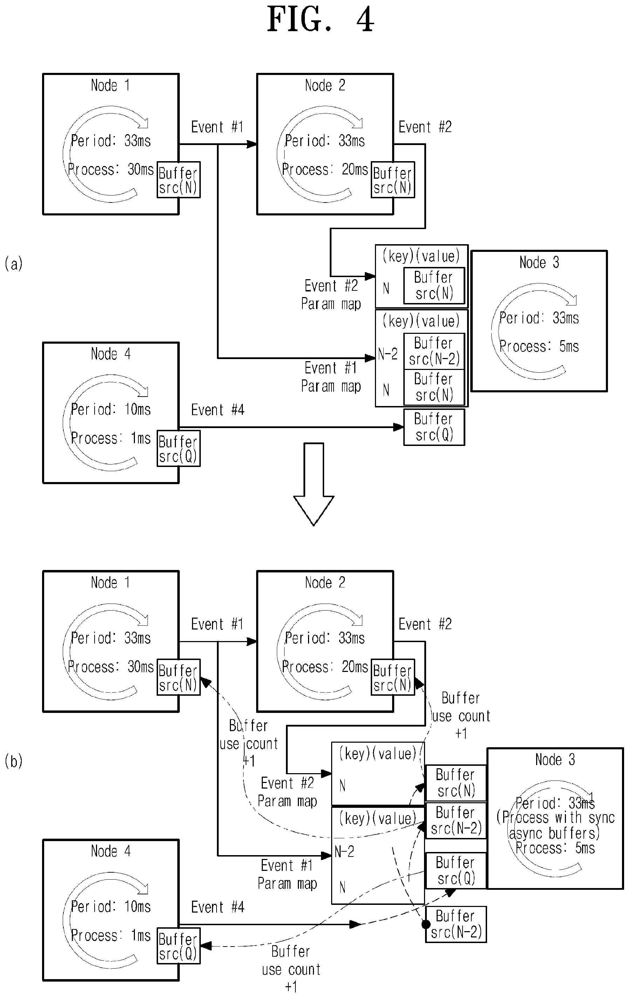

FIG. 4 illustrates a method of managing and scheduling a buffer according to embodiments.

The method according to embodiments may further include a method of processing multi-input data between nodes having different operation periods to guarantee algorithm stability during an application operation.

The following description will be made assuming that the nodes 1 to 3 have the same period (e.g. 33 ms) and a node 4 has a different period (e.g. 10 ms).

Referring to FIG. 4(a), the operations of the nodes 1 to 3 are the same as those described with reference to FIG. 3(a). Because the nodes 1 to 3 have the same period, the node 3, which receives the result (output) data of the nodes 1 and 2, may synchronize and process the result (output) data of the nodes 1 and 2 based on the key information of the same buffer source. In addition, the node 4 may process a job with a period and a processing time different from those of the nodes 1 and 2. The node 4 may write job processing data to a buffer source Q.

Referring to FIG. 4(b), the operations of the nodes 1 to 3 are the same as those described with reference to FIG. 3(b). Because the nodes 1 and 2 have the same period, the node 3 may synchronize and process the data of nodes 1 and 2. The node 3 does not synchronize the data of node 4 having a different period with the data of the nodes 1 and 2. The node 3 reads the data of the node 4 stored in the buffer source Q at the timing of reading the data of the buffer source N without synchronizing all the output data of the node 4 every 10 ms period (i.e., the data stored in the buffer source Q) with the output data of the nodes 1 and 2 (i.e., the data stored in the buffer source N). The previously stored data of the buffer source Q is not used by the node 3, and the key information (e.g., N-2) of the buffer source Q at a different timing is dropped in the parameter map. The node 3 may read the output data of the node 4 from the buffer source Q and increase the value of the count information about the buffer use (buffer_use_count) by '1.'

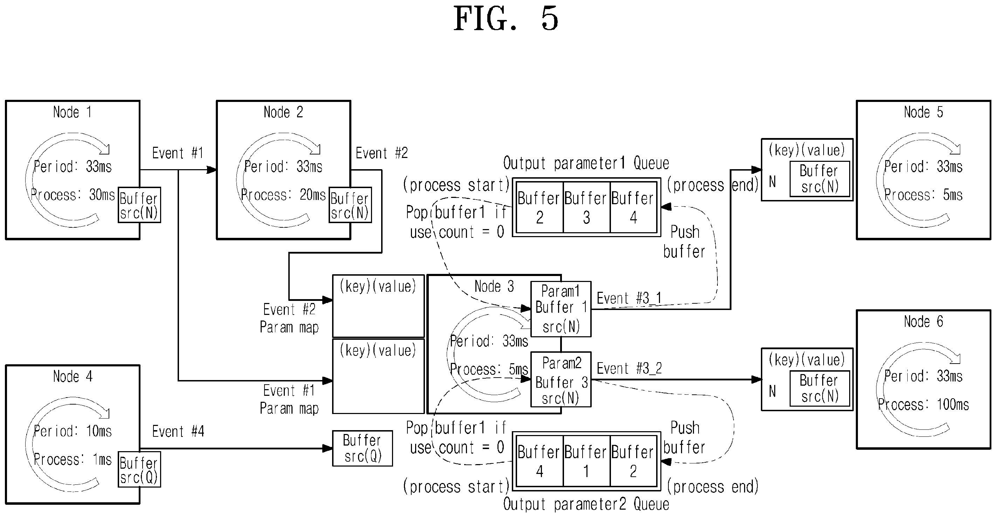

FIG. 5 illustrates a method of managing and scheduling a buffer according to embodiments.

The method according to embodiments may further include a method of distinguishing shared resources between nodes to lock or unlock a buffer and synchronizing buffer data between the nodes to cope with high application complexity.

A high level of application complexity may occur in a situation where the multi-output data is provided from the node 3 to a plurality of nodes (e.g., nodes 5 and 6) and the plurality of nodes (e.g., nodes 5 and 6) are different in the processing time from each other as shown in FIG. 5. The nodes 5 and 6 may read the output data of the node 3 (i.e., the data written to the buffer) from the buffer, based on different parameters related to the multi-output data of the node 3.

For example, referring to FIG. 5, the node 3 may manage the result data related to the job processing of the node 3 in the buffer and provide it to each of the nodes 5 and 6, based on an output queue identified by a parameter 1 and an output queue identified by a parameter 2.

The node 3 may process a job and write data to a buffer 1, of which the value of the count information about the buffer use (buffer_use count) in an output queue (buffer queue) identified by the parameter 1 is '0.' The node 3 may process a job and write data to a buffer 13, of which the value of the count information about the buffer use (buffer_use count) in an output queue (buffer queue) identified by the parameter 2 is '0.' The node 3 may provide the data in the buffer 1 to the node 5, and provide the data in the buffer 3 to the node 6. When the node 5 completes reading the data in the buffer 1, the buffer 1 is re-input to the output queue identified by the parameter 1. When the node 6 completes reading the data in the buffer 3, the buffer 3 is re-input to the output queue identified by the parameter 2.

Thus, the method according to embodiments may provide multi-output data based on multiple buffer queues even though application requirements and complexity increase.

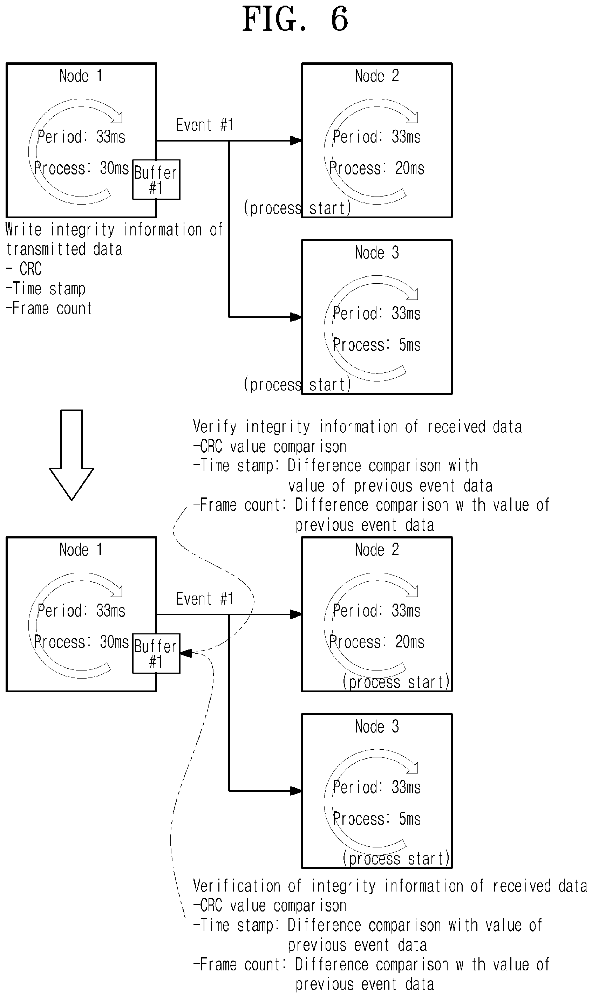

FIG. 6 shows a method of guaranteeing data integrity according to embodiments.

FIG. 6 illustrates a method of guaranteeing data integrity in the method of managing and scheduling the buffer described with reference to FIG. 1.

Referring to FIG. 1, a method according to embodiments may lock or unlock the buffer based on a manner of increasing or decreasing the value of the count information about the buffer use (buffer_use count) to occupy a shared resource (buffer), and may prevent data from being distorted when consuming the shared resource based on a read-only manner. For example, the buffer may be locked when the value of the count information about the buffer use (buffer_use count) is increased from '0' to '1,' and may be unlocked when the value of the count information about the buffer use (buffer_use_count) is decreased from '1' to '0.'

In addition to the operations described with reference to FIG. 1, referring to FIG. 6, the method according to embodiments may record (write) data in a shared resource (buffer), record the integrity information of the data together based on a cyclic redundancy check (CRC), a source time stamp, and/or a source count, and verify the integrity information immediately before using (reading) the data to detect whether the data is distorted.

For example, the node 1 may write data to the buffer 1 and additionally write the integrity information of the data to the buffer. The integrity information of the data according to embodiments may include at least one of the CRC, the time stamp, or a frame count. When the node 2 and/or the node 3 read the data in the buffer 1 written by the node 1, it may be detected whether there is an error in the data written in the buffer 1 based on the data integrity information. The node 2 and/or the node 3 may read the data in the buffer 1, calculate a CRC value, and identify whether an error occurred in the shared resource and/or in the process of reading the shared resource by comparing the calculated CRC value with a recorded CRC value, comparing a timestamp value of an event before a current event with a timestamp value of the current event, or comparing a frame count value of an event before the current event with a frame count value of the current event.

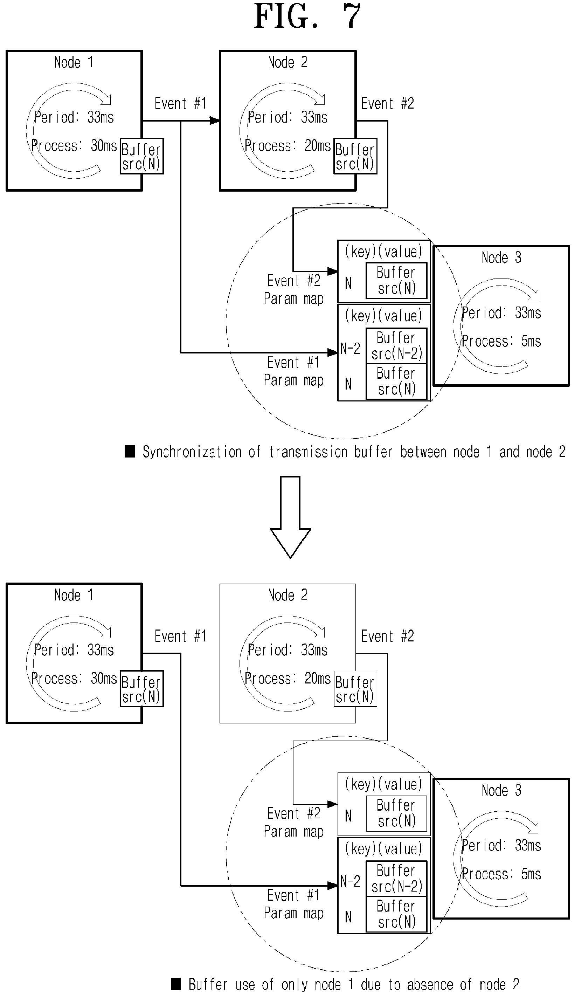

FIG. 7 illustrates a method of guaranteeing performance according to embodiments.

The method according to embodiments may identify whether to synchronize and read data input from a plurality of nodes based on the presence of a writer that dynamically indicates input (written) data of a buffer to guarantee performance. The method according to embodiments may prevent operation performance from being decreased due to no data input in some nodes among the plurality of nodes.

For example, FIG. 7 illustrates an operation for the node 3 to read buffer data (buffer source N) input by the nodes 1 and 2, in which the node 3 synchronizes and reads the data input to the buffer by the nodes 1 and 2 because the nodes 1 and 2 have the same period. In this case, when the node 2 of the nodes 1 and 2 is absent, the node 3 may read only the data input by the node 1 from the buffer. To prevent the performance from being decreased due to the node 3 waiting for data input when the node 3 of reading the data input by the plurality of nodes such as the nodes 1 and 2 is present but the input data of some nodes among the nodes 1 and 2 is absent, the nodes may additionally input a writer (or indicator) indicating the presence of data to the buffer when inputting the data to the buffer. The writer according to embodiments may indicate the presence of data based on true or false or based on a value of '0' or '1.' The method according to embodiments may read data only from a node related to the writer indicating the presence of the data.

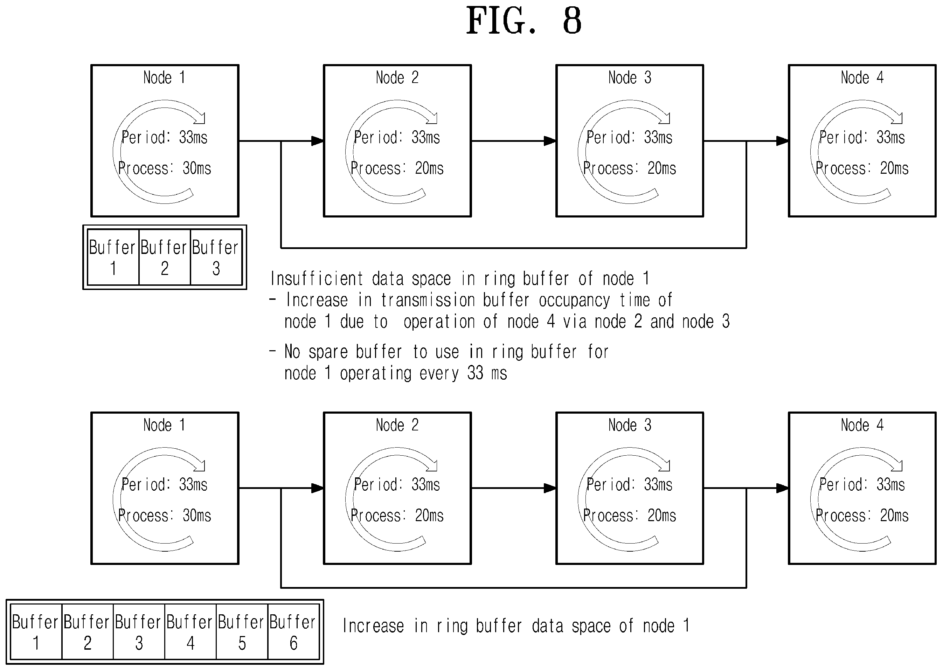

FIG. 8 illustrates a method of guaranteeing performance according to embodiments.

The method according to embodiments may dynamically adjust the number of data spaces operating within a ring buffer (buffer queue, see FIG. 2) to guarantee performance and optimize resource use.

Referring to FIG. 8, it may be assumed that the nodes 1 to 4 having the same period are present, the nodes 2 and 4 read data written by the node 1 from a buffer, the node 3 reads data written by the node 2, and the node 4 reads data written by the node 3. When the nodes 1 to 4 share a ring buffer (or buffer queue) having three buffer sizes, a buffer occupancy time of the node 1 inevitably increases to consume the periods for all of the nodes 1, 2, 3, and 4, and thus a data space in the ring buffer may be insufficient. The node 1 processes a job every period (e.g., 33 ms), and the nodes 2 to 4 also process jobs every same period, in which only three buffers lack memory to occupy the data of the node 1 in the buffer queue until the node 4 reads the data.

The method according to embodiments may dynamically increase or decrease the size of the ring buffer (buffer queue) based on relationships among the plurality of nodes. The minimum size of the ring buffer (buffer queue) may be set to be equal to or greater than the number of nodes sharing the buffer.

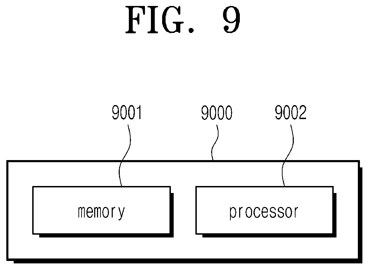

FIG. 9 illustrates a device for controlling a buffer according to embodiments.

A buffer control device 9000 according to embodiments may include a memory 9001 and/or a processor 9002. The memory 9001 may store instructions related to the buffer control method according to embodiments. The processor 9002 may be configured to perform the buffer control method according to embodiments.

Referring to FIG. 1 together, the processor may be configured to read data input to a buffer and increase a value of count information indicating whether the buffer is in use; lock the buffer based on the increased value of the count information; decrease the value of the count information when the data input to the buffer is completely read; and unlock the buffer based on the decreased value of the count information.

The processor may perform the buffer control method. The buffer control method may include the steps of: reading data input to a buffer and increasing a value of count information indicating whether the buffer is in use; locking the buffer based on the increased value of the count information; decreasing the value of the count information when the data input to the buffer is completely read; and unlocking the buffer based on the decreased value of the count information.

Referring to FIG. 2 together, regarding a buffer queue, when the buffer is a queue including a plurality of buffers, the buffer control method may further include the steps of: by a second node, reading data input by a first node to a first buffer in the queue; and by a first node, inputting data to a second buffer in the queue.

Referring to FIG. 3 together, regarding the synchronization based on the same period, a plurality of nodes sharing a buffer have the same period, a first node among the plurality of nodes inputs data to the buffer, second and third nodes among the plurality of nodes read the data input to the buffer by the first node, the second node inputs data to the buffer, and the third node synchronize and process the data input by the first node and the data input by the second node.

Referring to FIG. 4 together, first nodes among a plurality of nodes sharing the buffer have the same period, a second node has a period different from that of the first nodes, data input by the first nodes are synchronized, and only data related to the synchronization of the first nodes among the data input by the second node may be processed.

Referring to FIG. 5 together, regarding a plurality of queues, the buffer may include a first queue including a plurality of buffers identified by a first parameter, and second queues including a plurality of buffers identified by a second parameter, a first node may input data to the first queue and the second queue, a second node may read data from the first queue, and a third node may read data from the second queue.

Referring to FIG. 6 together, regarding integrity information, the buffer control method may further include the step of additionally inputting information about the integrity of data to the buffer after the data is input to the buffer, in which the information about the integrity may include at least one of a cyclic redundancy check (CRC), a time stamp, or a frame count.

Referring to FIG. 2 together, when the buffer is a ring buffer including a plurality of buffers, the buffer control method may further include the step of, by a second node, reading data input by a first node to a first buffer in the ring buffer, and by the first node, inputting data to a second buffer in the ring buffer.

Referring to FIG. 7 together, the buffer includes data input by a node and an indicator indicating whether the data is input to the buffer, and the data input to the buffer may be output based on the indicator.

Referring to FIG. 8 together, the buffer is at least one of a queue or a ring buffer, and the number of buffers included in the queue or the ring buffer may be adjusted based on the number of nodes sharing the buffer.

The method and device according to embodiments provide the following technical effects.

The integrity of data is guaranteed by protecting the memory reading (or inputting) and writing (or outputting) operations for data transmitted between the nodes. The maximum performance is guaranteed by synchronizing the input/output of the nodes at runtime and smoothly using the idle resources of a central processing unit (CPU) through dynamic scheduling. The data integrity between the nodes sharing resources is guaranteed, and a high level of application complexity is supported through input/output synchronization and dynamic scheduling.

The device and method according to embodiments protect the memory reading/writing operations of data transmitted between the nodes, thereby guaranteeing the integrity of data.

The device and method according to embodiments synchronize the input and output of a node at runtime and smoothly use the idle resources of the CPU through dynamic scheduling, thereby guaranteeing the maximum performance.

The device and method according to embodiments guarantee the data integrity between the nodes sharing the resources, and support a high level of application complexity through input and output synchronization and dynamic scheduling.

The embodiments have been described in terms of a method and/or a device, and the description of the method and the description of the device may be applied complementary to each other.

Operations according to the embodiments described in this specification may be performed by a transmission/reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or combinations thereof. The firmware, software, and/or combinations thereof may be stored in the processor or the memory.

The operations according to the above-described embodiments may be performed by the transmission device and/or the reception device according to the embodiments. The transmission/reception device may include a transmitter/receiver configured to transmit and receive media data, a memory configured to store instructions (program code, algorithms, flowcharts and/or data) for the processes according to the embodiments, and a processor configured to control the operations of the transmission/reception device.

The processor may be referred to as a controller or the like, and may correspond to, for example, hardware, software, and/or a combination thereof. The operations according to the above-described embodiments may be performed by the processor.

Various embodiments of the present disclosure do not list all available combinations but are for describing a representative aspect of the present disclosure, and descriptions of various embodiments may be applied independently or may be applied through a combination of two or more.

A number of embodiments have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

While this disclosure includes specific examples, it will be apparent after an understanding of the disclosure of this application that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

## Claims

1. A processor-implemented method, the method comprising:
increasing a value of count information responsive to determining whether a buffer is in use and responsive to input data being input to the buffer;
locking the buffer responsive to the increasing of a value of the count information;
decreasing the value of the count information responsive to a completion of reading the input data in the buffer; and
unlocking the buffer responsive to the decreasing of the value of the count information.

2. The method of claim 1, wherein the buffer is one of a plurality of buffers,
wherein the plurality of buffers comprise a queue, and
wherein the method further comprises:
inputting, by a first node, first data of the input data to a first buffer within the queue;
reading by a second node, the first data; and
inputting, by the first node, second data of the input data to a second buffer within the queue.

3. The method of claim 1 or 2, wherein the buffer comprises a plurality of nodes, each node of the plurality of nodes being configured to perform operations within a same period, and
wherein the method further comprises:
inputting, by a first node among the plurality of nodes, first data of the input data to the buffer,
reading, by a second node and a third node among the plurality of nodes, the first data from the buffer,
inputting, by the second node, second data of the input data to the buffer; and,
synchronizing and processing, by the third node, the first data and the second data.

4. The method of any one of claims 1 to 3, wherein the buffer comprises a plurality of nodes, first nodes of the plurality of nodes being configured to perform operations within a same first period and second nodes of the plurality of nodes being configured to perform operations within a second period, the second period being different from the first period,
wherein the method further comprises:
synchronizing, by the first nodes, first data input of the input data by the first nodes, and
wherein only synchronization data of the input data related to the synchronizing of the first nodes among second data input by the second node is processed.

5. The method of any one of claims 1 to 4, wherein the buffer is one of a plurality of buffers,
wherein the plurality of buffers comprise a first queue identified by a first parameter and a second queue identified by a second parameter, and
wherein the method further comprises:
inputting, by a first node, first data of the input data to the first queue and the second queue,
reading, by a second node, first data from the first queue, and
reading, by a third node, second data from the second queue.

6. The method of any one of claims 1 to 5, further comprising:
inputting integrity information about integrity of the input data to the buffer subsequent to the input data being input to the buffer,
wherein the integrity information comprises one or more of a cyclic redundancy check (CRC), a time stamp, or a frame count.

7. The method of any one of claims 1 to 6, wherein the buffer comprises a ring buffer, and
wherein the method further comprises:
reading, by a second node, first data input by a first node to a first buffer within the ring buffer; and
inputting, by the first node, second data to a second buffer within the ring buffer.

8. The method of any one of claims 1 to 7, wherein the buffer includes data input by a node and an indicator indicating whether the input data is in buffer, and
wherein the data input to the buffer is output based on the indicator.

9. The method of any one of claims 1 to 8, wherein the buffer comprises one or more of a queue or a ring buffer, and
wherein a number of buffers within the queue or a size of the ring buffer is adjusted based on a number of nodes sharing the buffer.

10. An electronic apparatus, comprising:
one or more processors configured to execute instructions; and
a memory storing the instructions, wherein execution of the instructions configures the one or more processors to: increase a value of count information responsive to determining whether a buffer is in use and responsive to input data being input to the buffer;
lock the buffer responsive to the increasing of the value of the count information;
decrease the value of the count information responsive to a completion of reading the input data in the buffer; and
unlock the buffer responsive to the decreasing of the value of the count information.
